# EUROPÄISCHE PATENTANMELDUNG

(11) **EP 2 759 211 A1**
(43) Veröffentlichungstag der Anmeldung: **30.07.2014**
(21) Anmeldenummer: 14151298.8
(22) Anmeldetag: 15.01.2014
(51) Int. Cl.: A23G 1/10, A23G 1/52, A23G 1/04

(54) **Verfahren und Vorrichtung zum Gießen eines aus Süßwarenmasse und Gas bestehenden heterogenen Gemisches**

(30) Priorität: 25.01.2013 DE 102013201216
(71) Anmelder: Winkler und Dünnebier Süsswarenmaschinen GmbH, 56579 Rengsdorf (DE)
(72) Erfinder: Runkel, Rainer, 56579 Rengsdorf (DE); Pilgram, Benedikt, 51588 Nümbrecht (DE); Huperz, Albert, 57489 Drolshagen (DE)
(74) Vertreter: Lippert, Stachow & Partner

(57) **Zusammenfassung**

Die Erfindung betrifft ein Verfahren und eine Vorrichtung zum Gießen eines aus Süßwarenmasse und Gas bestehenden heterogenen Gemisches mittels eines Pumpsystems (4), das wenigstens mit einem diskontinuierlich wirkenden Dosiermittel (6a, 6b) arbeitet, mit dem alternierend ein Ansaugschritt und ein Dosierschritt ausgeführt wird, wobei ein Stellmittel (10a, 10b) mit wenigstens einem Stellkanal (14a, 14b) zwischen einer Ansaugposition und einer Dosierposition umgeschaltet wird, mit der Maßgabe, dass das Gemisch mit einem Überdruck gegenüber dem außerhalb des Pumpsystems (4) herrschenden Atmosphärendruck in einen Masseeingang (5) des Pumpsystems (4) kontinuierlich hineingefördert wird, dass das Dosiermittel(6a, 6b) während des Dosierschritts durch eine Düse (7a, 7b) Gemisch in eine Gießform (8) einfüllt, wobei das Gemisch dann, wenn es die Düse (7a, 7b) verlässt, in die Atmosphäre außerhalb des Pumpsystems (4) gelangt und eingeschlossenes Gas in der Süßwarenmasse expandiert und Gasblasen gebildet werden, die eine Porosität der Süßwarenmasse erzeugen.

## Beschreibung

Die Erfindung betrifft ein Verfahren und eine Vorrichtung zum Gießen eines aus Süßwarenmasse und Gas bestehenden heterogenen Gemisches, wie in den unabhängigen Ansprüchen 1 und 3 definiert.

Das Verfahren und die Vorrichtung eignen sich beispielsweise für die Herstellung von sogenannter Luftschokolade.

Luftschokolade bildet, bevor sie in Formen gegossen wird, ein heterogenes Gemisch aus geschmolzener Schokolade und Gas. Als Gas wird üblicherweise Luft verwendet. Alternativ kann beispielsweise auch Stickstoff verwendet werden.

Bevor das erfindungsgemäße Verfahren und die Vorrichtung zur Anwendung kommen können, muss daher ein Gemisch aus Süßwarenmasse und Gas hergestellt werden. Eine hierfür geeignete Aufbereitungsvorrichtung ist in der DE 195 00 291 A1 beschrieben. Diese Offenlegungsschrift schlägt vor, in einem gasbeaufschlagten Druckbehälter Schokolademasse mit einem Gas zu verrühren. So werden in dem Druckbehälter der bekannten Aufbereitungsvorrichtung mit einem Rührwerk Poren von Gas in der Schokoladenmasse erzeugt. Da dies unter Druck geschieht, sind die Volumina der Poren zunächst geringer als die Poren im fertigen Produkt. Das Gemisch wird dann einer nachgeordneten Gießeinrichtung zugeführt und zu dem Zweck aus einem Auslass des Druckbehälters und durch eine Leitung kontinuierlich weitergefördert bis in die Gießeinrichtung.

Wenn das Gemisch aus der Gießeinrichtung in die Umgebung gelangt, expandieren die Poren, weil in der Umgebung der normale atmosphärische Druck herrscht, der geringer ist, als der Druck in der Aufbereitungsvorrichtung und in der Gießeinrichtung.

Grundsätzlich ist auch der Effekt bekannt, dass in Flüssigkeit gelöstes Gas, sobald der Druck abnimmt, aus dem gelösten in den gasförmigen Zustand übergehen und in eine Pore eintreten oder eine neue Pore bilden kann. Auch durch diesen Effekt können in flüssiger Schokolade Poren gebildet oder vergrößert werden.

Die Erfindung beschäftigt sich nicht mit der Aufbereitung des heterogenen Gemisches, sondern mit dem Verfahren und der Vorrichtung zum Gießen des Gemisches.

Wenn die vorgeschaltete Aufbereitungsvorrichtung das Gemisch kontinuierlich in die Vorrichtung zum Gießen hinein transportiert und kontinuierlich gegossen würde, dann könnte im Verlauf des Gießprozesses eine gleichmäßige Expansion des Gases in den Poren erzielt werden, da innerhalb des Systems kein Druckabfall erfolgt.

Mit dem vorgeschlagenen Verfahren und der Vorrichtung soll im Unterschied dazu aber eine diskontinuierliche Dosierung des Gemisches in eine Gießform begünstigt werden.

Zu dem Zweck wird vorgeschlagen ein Verfahren zum Gießen eines aus Süßwarenmasse und Gas bestehenden Gemisches mittels wenigstens eines Pumpsystems, das wenigstens mit einem diskontinuierlich wirkenden Dosiermittel arbeitet, mit dem alternierend ein Ansaugschritt und ein Dosierschritt ausgeführt wird, wobei ein Stellmittel mit wenigstens einem Arbeitskanal zwischen einer Ansaugposition und einer Dosierposition umgeschaltet wird, mit der Maßgabe, dass das Gemisch mit einem Überdruck gegenüber dem außerhalb des Pumpsystems herrschenden Atmosphärendruck in einen Masseeingang des Pumpsystem kontinuierlich hineingefördert wird, dass das Dosiermittel während des Dosierschritts durch eine Düse Gemisch in eine Gießform einfüllt, wobei das Gemisch dann, wenn es die Düse verlässt, in die Atmosphäre außerhalb des Pumpsystems gelangt und eingeschlossenes Gas in der Süßwarenmasse expandiert und Gasblasen gebildet werden, die eine Porosität der Süßwarenmasse erzeugen, wobei das Gemisch während des Ansaugschritts kontinuierlich vom Masseeingang des Pumpsystems weiter bis in das Dosiermittel gefördert wird, und wobei das Stellmittel anschließend in die Dosierposition umgeschaltet und gleichzeitig die weitere Zuförderung des Gemisch vom Masseeingang des Pumpsystems in das Dosiermittel unterbrochen wird, wobei das kontinuierlich in den Masseeingang des Pumpsystems hinein gefördertes Gemisch dann, wenn das Stellmittel in seine Dosierposition geschaltet ist, in einen Pufferspeicher des Pumpsystems umgeleitet.

Wenn diskontinuierlich in aufeinanderfolgende Gießformen gegossen wird, treten zwischen den Dosiervorgängen (Gießvorgänge) Dosierpausen auf, in denen nicht gegossen wird. Während einer Dosierpause gelangt weiteres Gemisch aus der Aufbereitungsvorrichtung in das Pumpsystem. Nach dem vorgeschlagenen Verfahren wird jenes Gemisch, welches während der Dosierpausen zugefördert wird, in den oben erwähnten Pufferspeicher transportiert, in dem es ungefähr unter demselben Druck bleibt, mit dem es in das Pumpsystem befördert wird, wobei dass dann, wenn das Stellmittel in seine Ansaugposition umgeschaltet worden ist, zumindest ein Anteil des Gemisches aus dem Pufferspeicher in das Dosiermittel gefördert wird. Dadurch kann erreicht werden, dass das im Pufferspeicher vorgehaltene Gemisch ausgetauscht wird und dass dadurch keine nennenswerte Druckänderung stattfindet. Daher bleibt auch die Beschaffenheit des aufbereiteten Gemisches erhalten. Dies begünstigt die Qualität des Gemisches und erleichtert es, die Porösität der gegossenen Süßwarenmasse gleichmäßig zu halten und die Porengröße des fertigen Süßwarenartikels auf das gewünschte Maß zu bringen.

.. Besonders bevorzugt ist es, wenn das im Pufferspeicher vorgehaltene Gemisch möglichst vollständig aus dem Pufferspeicher heraus und in Richtung des Dosiermittels gefördert wird. Auf diese Weise wird vermieden, dass Reste des Gemisches längere Zeit in dem Pufferspeicher verweilen und sich darin festsetzen oder gar zu hygienischen Problemen führen.

Wenn das Stellmittel in seine Ansaugposition umgeschaltet worden ist, wird anschließend zumindest ein Anteil des Gemisches aus dem Pufferspeicher in das Dosiermittel gefördert.

Es hat sich als günstig herausgestellt, wenn die Menge, beziehungsweise das Volumen, das der Pufferspeicher aufnehmen kann, etwa so groß ist, wie die Menge, beziehungsweise das Volumen, welches das Dosiermittel für einen Dosierschritt aufnehmen kann. Das Verfahren kann dann so betrieben werden, dass während des Ansaugschrittes das Volumen des Pufferspeichers nahezu vollständig geleert wird und ein identisches Volumen des Gemisches ausreicht, um das Dosiermittel vollständig zu füllen.

Außerdem wird eine erfindungsgemäße Vorrichtung zum Gießen eines aus Süßwarenmasse und Gas bestehenden komprimierten Gemisches vorgeschlagen. Die Vorrichtung umfasst ein Pumpsystem mit wenigstens einem Masseeingang zur kontinuierlichen Zuleitung des komprimierten Gemisches in das Pumpsystem, wenigstens ein Dosiermittel und ein Stellmittel sowie eine Düse zur Abgabe des Gemisches, wobei das Pumpsystem so gestaltet ist, dass alternierend ein Ansaugschritt und ein Dosierschritt ausführbar ist und das Stellmittel zu diesem Zweck zwischen einer Ansaugposition und einer Dosierposition umschaltbar ist, und wobei das komprimierte Gemisch während des Dosierschritts aus der Düse heraus durch die Atmosphäre, die das Pumpsystem umgibt, in eine Gießform einfüllbar ist, wobei das Pumpsystem eine Hauptleitung aufweist, die von dem Masseeingang zum Stellmittel geführt ist, wobei eine Abzweigung von der Hauptleitung vorgesehen ist, und wobei an der Abzweigung ein Pufferspeicher angeordnet ist.

Durch die Verwendung eines Pumpsystems mit einem Stellmittel können taktweise Gießformen gefüllt werden.

Das Dosiermittel umfasst einfacherweise einen Dosierzylinder mit einem Dosierkolben. Beim Ansaugschritt ist das Stellmittel in seiner Ansaugposition und verbindet auf diese Weise die Hauptleitung mit dem Dosierzylinder. In dem Dosierzylinder wird der Dosierkolben für den Ansaughub zurückbewegt und füllt sich auf diese Weise mit dem Gemisch aus der Hauptleitung. Zumindest ein Teil des Gemisches, das in den Dosierzylinder gesogen wird, kommt aus dem Pufferspeicher. Die Vorrichtung ist vorzugsweise so gestaltet, dass der Pufferspeicher während des Ansaugschrittes nahezu vollständig geleert wird. Überdies kann eine geeignete Maßnahme zur Erzeugung einer Gegenkraft vorgesehen sein, die einen Druckabfall im Gemisch verhindert.

Sobald der Ansaughub beendet ist, wird das Stellglied umgeschaltet, damit es den Dosierzylinder mit der Düse des Pumpsystems verbindet. Für den Dosierhub wird sodann der Dosierkolben vorwärtsbewegt und drückt dabei das Gemisch aus dem Dosierzylinder in Richtung der Düse. Während des Dosierschrittes stoppt die Gießform unterhalb der Düse. Das Gemisch gelangt aus der Düse in die Atmosphäre. Dabei expandiert das in dem Gemisch enthaltene Gas und in der Süßwarenmasse und es bilden und/oder vergrößern sich Gasporen in der Süßwarenmasse.

Einfacherweise weist der Pufferspeicher ein Puffergehäuse auf, in dem ein bewegliches Arbeitselement angeordnet ist, wobei dass das Arbeitselement innerhalb des Puffergehäuses einen Vorratsraum mit variablem Volumen schafft, und wobei das Gemisch in diesem Vorratsraum speicherbar ist. Das Arbeitselement kann eine Membran, ein Faltenbalg, ein Arbeitskolben, etc. sein.

Zweckmäßig weist das Arbeitselement, z. B. ein Arbeitskolben an seiner dem Gemisch zugewandten Seite eine konkav gewölbte Oberfläche auf. Diese Gestaltung fördert es, dass das strömende Gemisch auch an der Oberfläche des Arbeitselements das Gemisch wegspült. So ist für permanenten Austausch gesorgt. Vorteilhaft ist eine Vorspanneinrichtung für das Arbeitselement des Pufferspeichers vorgesehen, wobei die Vorspanneinrichtung jene Seite des Arbeitselements mit einer Kraft beaufschlagt, die dem Vorratsraum abgewandt ist. Die Vorspanneinrichtung kann jede geeignete mechanische Feder aufweisen.

Wenn zur Erzeugung der Vorspannung ein Gasdruck verwendet werden soll, dann kann auf derjenigen Seite des Arbeitselements, die dem Vorratsraum abgewandt ist, innerhalb des Puffergehäuses ein Puffergasraum gebildet sein.

Der Puffergasraum ist zweckmäßig seinerseits über eine Verbindungsleitung mit einem externen Puffergasspeicher verbunden, wobei in dem externen Puffergasspeicher ein Zusatzvolumen an Gas unter Druck steht.

Ein weiterer Vorteil wird dann erzielt, wenn das Zusatzvolumen des externen Puffergasspeichers größenverstellbar ist. Durch diese Maßnahme kann Einfluss darauf genommen werden, wie hoch der Druckabfall ist, wenn das Arbeitselement ganz ausgefahren und das minimale Volumen des Vorratsraums des Pufferspeichers erreicht ist. Die Größe des Zusatzvolumens kann zum Beispiel so eingestellt werden, dass dann, wenn der Vorratsraum sein minimales Volumen erreicht hat, noch ein bestimmter gewünschter minimaler Druck im externen Puffergasspeicher herrscht.

Der Druck, mit dem das Gemisch aus der Aufbereitseinrichtung in das Pumpsystem gelangt, kann in einem gewissen Druckbereich liegen, zum Beispiel 0,5 - 15 bar, bevorzugt 1 - 10 bar und besonders bevorzugt 3 - 6 bar. Die Vorrichtung ist dazu hergerichtet, dass das Zusatzvolumen so eingestellt werden kann, dass sowohl beim maximalen Druck (15 bar), als auch beim minimalen Druck (0,5 bar) des ankommenden Gemisches stets ein gewünschter Druckabfall zu erzielen ist.

Nützlich ist es, wenn eine Druckerzeugereinheit vorgesehen ist, und wenn die Druckerzeugereinheit mit dem externen Druckspeicher, respektive mit dem Puffergasraum verbunden ist. Die Druckerzeugereinheit kann zum Beispiel eine zentrale Druckluftversorgung eines Produktionsgebäudes sein, das neben anderen Anlagen auch den externen Puffergasspeicher speist, oder eine interne Druckerzeugereinheit, die Teil der erfindungsgemäßen Vorrichtung ist.

Bei einer einfachen Ausführungsform umfasst der externe Puffergasspeicher wenigstens einen Zylinder, der mit wenigstens einem ersten Zylinderraum, einem Stellkolben und wenigstens einer Stellkolbenstange versehen ist, wobei der Zylinderraum das Zusatzvolumen des externen Puffergasspeichers bildet.

Bei dem Zylinder kann sich eine Kolbenstange zumindest auf derjenigen Seite des Stellkolbens befinden, die dem als Zusatzvolumen wirkenden ersten Zylinderraum abgewandt ist. Zweckmäßig ist die Stellkolbenstange mit einer Einstelleinrichtung versehen, mit welcher die Position des Stellkolbens veränderbar ist. Dadurch kann durch eine Änderung der Stellkolbenposition ganz einfach die Größe des Zusatzvolumens verändert werden.

Die Einstelleinrichtung weist bevorzugt einen Spindelantrieb auf. Zweckmäßig ist die Spindel selbsthemmend, so dass sie sich durch den Druck im externen Pufferspeicher, welcher über die Stellkolbenstange auf die Spindel einwirkt, nicht verstellen kann. Angetrieben werden kann die Spindel per Hand. Alternativ kann ein Motor vorgesehen sein, um die Spindel anzutreiben.

Weiterhin nutzbringend ist es, wenn ein von der Druckerzeugereinheit gespeister Druckvorratsspeicher vorgesehen ist, und wenn der Druckvorratsspeicher über ein erstes Druckregelventil mit dem externen Puffergasspeicher verbunden ist, respektive mit dem Puffergasraum.

Über das Druckregelventil kann Gas aus dem Druckvorratsspeicher in den externen Puffergasspeicher geleitet werden, falls dort ein Druckverlust auftritt. Auf diese Weise ist in dem externen Puffergasspeicher stets ein ausreichender Druck vorhanden. Das Druckregelventil könnte während des Ansaugschrittes abgeschaltet sein. Im Prinzip kann das Druckregelventil den Maximaldruck oder den Minimaldruck regeln. Vorteilhaft regelt es den Mindestdruck. Dadurch kann dann, wenn der Druck im externen Puffergasspeicher abnimmt, beispielsweise aufgrund von Leckage, der Druckabfall durch das Druckregelventil wieder ausgeglichen werden.

Der Zylinder des externen Puffergasspeichers kann ein doppeltwirkender Zylinder mit einem zweiten Zylinderraum sein. Dann ist vorzugsweise ein zweites Druckregelventil vorgesehen und der Druckvorratsspeicher ist über das zweite Druckregelventil mit dem zweiten Zylinderraum des doppeltwirkenden Zylinders verbunden.

Obwohl der Druckvorratsspeicher sowohl den ersten Zylinderraum als auch den zweiten Zylinderraum speist, sind die beiden Volumina nicht miteinander verbunden, sondern durch die zwischengeschalteten Druckregelventile voneinander getrennt.

Außerdem kann über das zweite Druckregelventil ein Hilfsdruck in dem zweiten Zylinderraum aufgebaut werden. Auf diese Weise wird die Druckdifferenz zum ersten Zylinderraum (externer Puffergasspeicher) verringert und damit die Kräfte reduziert, welche auf die Einstelleinrichtung (Spindel) einwirken. Diese einfache Maßnahme erleichtert die Betätigung der Einstelleinrichtung.

Hilfreich ist auch, wenn zumindest das zweite Druckregelventil eine Entlüftungsfunktion hat. Dadurch kann Gas aus dem zweiten Zylinderraum in die Umgebung abgelassen werden. Dies hilft insbesondere dann, wenn bei einer Volumenverkleinerung des zweiten Zylinderraums vermieden werden soll, dass sich darin höherer Druck aufbaut.

Zusätzlich zu dem größenverstellbaren Zusatzvolumen des doppeltwirkenden Zylinders kann wenigstens ein weiterer Druckbehälter vorgesehen sein, der ein konstantes Zusatzvolumen zur Ergänzung des externen Puffergasspeichers beiträgt. Auf diese Weise können für den größenverstellbaren Anteil des Zusatzvolumens Standardbauteile, zum Beispiel Standardzylinder verwendet werden. Außerdem ist es aus Platzgründen nützlich, wenn ein Teil des Zusatzvolumens nicht nah am Pumpsystem angeordnet werden muss und stattdessen der Druckbehälter abseits angeordnet werden kann, wo ausreichend Platz zur Verfügung steht.

Als günstig hat sich weiterhin herausgestellt, zwei doppeltwirkende Zylinder vorzusehen, die gemeinsam das größenverstellbare Zusatzvolumen bilden. Die Zylinder können in Zwillingsanordnung nebeneinander angeordnet sein. Ihre Stellkolbenstangen können entweder durch separate Spindeln oder über eine gemeinsame Spindel verstellbar sein.

Die Druckerzeugereinheit kann einen Druckverstärker aufweisen, welcher den Druckvorratsspeicher speist. Wenn die Druckerzeugereinheit selbst keinen ausreichenden Druck bereitstellen kann, beispielsweise eine gebäudeseitige Druckluftversorgung, dann hilft es, wenn ein Druckverstärker den Druckvorratsspeicher mit einem höheren Druck aufladen kann.

Nachstehend ist die Erfindung in einer Zeichnung beispielhaft dargestellt und anhand mehrer Figuren detailliert beschrieben. Es zeigen:
- Fig. 1:: eine schematische Darstellung einer erfindungsgemäßen Vorrichtung und eines vorgeschalteten Kreislaufs zur Aufbereitung eines Gemisches aus Süßwarenmasse und Gas,
- Fig. 2:: eine schematische Ansicht der erfindungsgemäßen Vorrichtung,
- Fig. 3a-3h:: Varianten von Pufferspeichern mit unterschiedlichen Vorspanneinrichtungen,
- Fig. 4:: einen bevorzugten Pufferspeicher mit einem doppeltwirkenden Zylinder als externem Puffergasspeicher sowie mit einem zusätzlichen Druckbehälter,
- Fig. 5:: ein externer Druckspeicher, der aus zwei doppeltwirkenden Zylindern gebildet ist sowie ein einem zusätzlicher Druckbehälter.

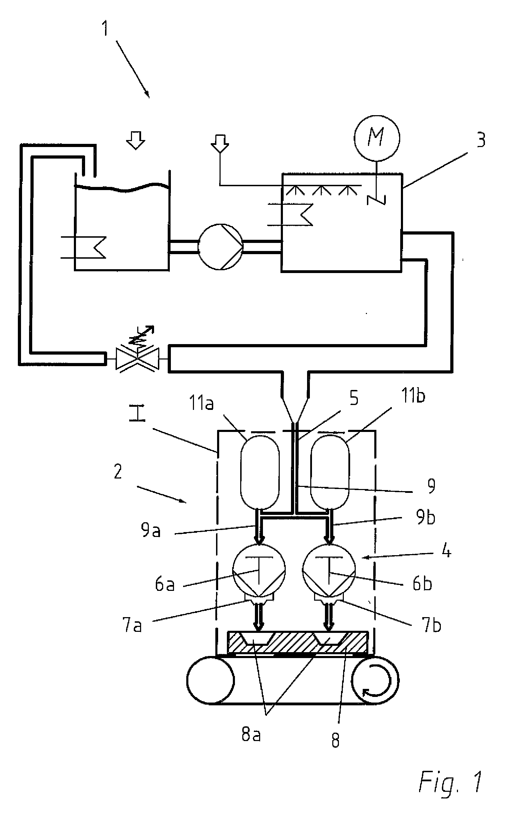

Fig. 1 zeigt schematisch einen Ausschnitt einer Produktionsanlage 1 für Süßwarenartikel. Mit dieser Produktionsanlage können aus Süßwarenmasse und Gas bestehende Gemische hergestellt und in Gießformen dosiert werden.

Auf diese Weise werden beispielsweise Tafeln aus sogenannter Luftschokolade hergestellt. Nachfolgend werden das Verfahren und die Funktion der Vorrichtung am Beispiel von Schokolade erläutert.

Die erfindungsgemäße Vorrichtung 2 zum Gießen des Gemisches stellt dabei nur einen Teil der dargestellten Produktionsanlage 1 dar. Dieser Teil ist in Fig. 1 mit einer gestrichelten Linie I umrahmt. Oberhalb der erfindungsgemäßen Vorrichtung ist in Fig. 1 eine Aufbereitungsvorrichtung 3 gezeigt, mit der Schokolade, mit einem Gas vermischt wird, z. B. Luft. Das Gemisch wird üblicherweise innerhalb der Aufbereitungsvorrichtung unter Druck stehend hergestellt und unter Druck weitergeleitet in eine Gießvorrichtung. Es enthält komprimierte Poren aus Gas in der Schokolade. Wenn das Gemisch in die umgebende Atmosphäre gelangt, dann expandieren die Poren, weil der Druck der Atmosphäre geringer ist als der Druck innerhalb der Vorrichtung.

Die Vorrichtung zum Gießen umfasst ein Pumpsystem 4 mit einem Masseeingang 5 in den das Gemisch aus der Aufbereitungsvorrichtung kommend kontinuierlich in das Pumpsystem gefördert wird. Im vorliegenden Ausführungsbeispiel sind parallel geschaltet zwei Dosiermittel 6a beziehungsweise 6b vorgesehen, die gleichzeitig zwei Süßwarenartikel oder zwei Reihen von Süßwarenartikeln durch eine entsprechende Anzahl von Düsen 7a beziehungsweise 7b in eine Gießform 8 mit entsprechender Anzahl von Formvertiefungen 8a dosieren können.

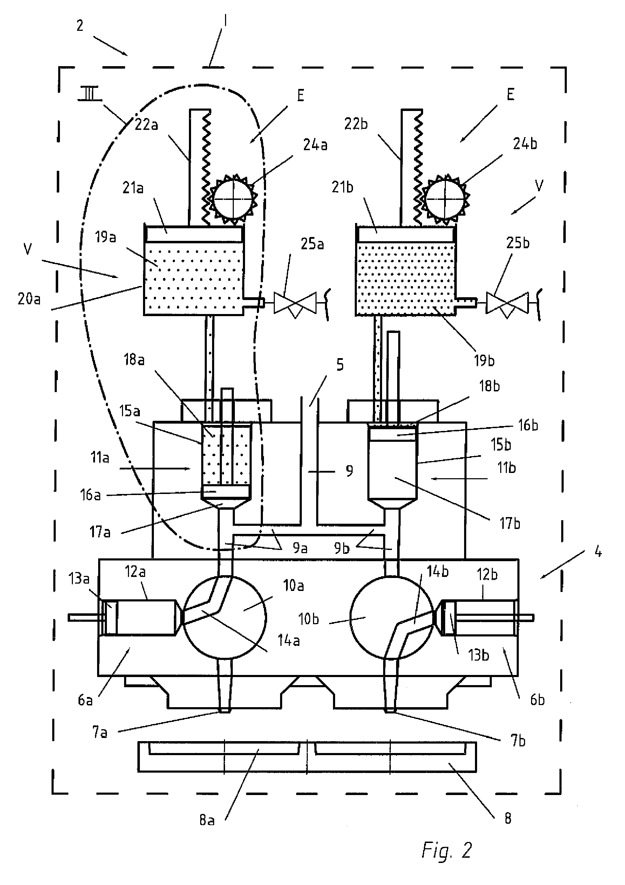

In Fig. 1 ist eine Hauptleitung 9 zu erkennen, die verzweigt ist und einen Hauptleitungszweig 9a und einen Hauptleitungszweig 9b aufweist. Der Hauptleitungszweig 9a führt direkt in das Dosiermittel 6a und der Hauptleitungszweig 9b in das Dosiermittel 6b. Jedes Dosiermittel dosiert Gemisch diskontinuierlich. Es führt alternierend einen Ansaugschritt und einen Dosierschritt aus. Während des Dosierschritts wird eine abgemessene Menge des Gemisches an die umgebende Atmosphäre abgegeben. Beim Austritt aus der Düse fällt das Gemisch in die Gießform 8 herab. Während des Dosierschritts wird die Hauptleitung durch je ein Stellmittel 10a beziehungsweise 10b (siehe Fig. 2) unterbrochen. Während der Dauer dieser Unterbrechung kann kein Gemisch aus der Aufbereitungsvorrichtung in das Dosiermittel gelangen. Die Aufbereitungsvorrichtung fördert dennoch kontinuierlich weiteres Gemisch in den Masseeingang 5 des Pumpsystems 4. Damit das Pumpsystem das Gemisch aufnehmen kann, ist zu beiden Seiten hinter der Verzweigung der Hauptleitung je einen Pufferspeicher 11a und 11b vorgesehen. Details des Pufferspeichers sind in Fig. 2 dargestellt.

In Fig. 2 ist die oben beschriebene Vorrichtung vergrößert dargestellt. Das Pumpsystem 4 weist zu beiden Zweigen der Hauptleitung 9 je ein Dosiermittel 6a beziehungsweise 6b auf, das Gemisch ansaugen und ausstoßen kann. Jedes Dosiermittel umfasst einen Dosierzylinder 12a beziehungsweise 12b und einen Dosierkolben 13a beziehungsweise 13b. Der Dosierkolben kann eine Ansaugbewegung und eine Dosierbewegung ausführen.

Die beiden Dosiermittel und Stellmittel der Vorrichtung arbeiten üblicherweise synchron. Um aber den Ansaugvorgang und den Dosiervorgang besser erläutern zu können, ist (vereinfachend) in Fig. 2 links der Ansaugschritt und rechts der Dosierschritt dargestellt.

Außerdem ist je ein Stellmittel 10a beziehungsweise 10b vorgesehen, das einen Stellkanal 14a beziehungsweise 14b aufweist. Es kann zwei Positionen einnehmen, eine erste Position ist für den Ansaugschritt vorgesehen. Das links in Fig. 2 gezeigte Stellmittel 10a nimmt die erwähnte Ansaugposition ein, bei welcher der Hauptleitungszweig 9a über den Stellkanal 14a mit dem Dosierzylinder 12a verbunden ist.

Das in Fig. 2 rechts gezeigte Stellmittel 10b nimmt die Dosierposition ein, bei welcher der Dosierzylinder 12b über den Stellkanal 14b mit der Düse 7b verbunden ist.

Weiterhin zeigt Fig. 2 auf jeder Seite der verzweigten Hauptleitung die Pufferspeicher 11a beziehungsweise 11b. Jeder dieser Pufferspeicher weist ein Puffergehäuse auf, in dem je ein bewegliches Arbeitselement angeordnet ist. Das Arbeitselement ist gemäß Fig. 2 ein Arbeitskolben 16a beziehungsweise 16b. Der Arbeitskolben schafft auf einer Seite des Puffergehäuses einen Vorratsraum 17a beziehungsweise 17b, in welchem Schokolade-Gas-Gemisch gespeichert werden kann, welches aus der Hauptleitung in den Vorratsraum gelangt. Auf der gegenüberliegenden Seite des Arbeitskolbens ist eine Vorspanneinrichtung V vorgesehen, die beim vorliegenden Ausführungsbeispiel mit Gasdruck arbeitet. Die dem Vorratsraum abgewandte Seite des Puffergehäuses bildet zu dem Zweck einen Puffergasraum 18a beziehungsweise 18b. Um das Volumen des Puffergasraums zu vergrößern, ist zusätzlich ein externer Puffergasspeicher 19a beziehungsweise 19b vorgesehen und mit dem Puffergasraum über eine Leitung verbunden. Der externe Puffergasspeicher enthält ein größenverstellbares Zusatzvolumen für Puffergas. Nach Fig. 2 weist der externe Puffergasspeicher einen Zylinder 20a beziehungsweise 20b und einen Stellkolben 21a beziehungsweise 21b auf. Der Stellkolben steht im regulären Betrieb der Vorrichtung still. Seine Position wird nur dann verändert, wenn das Zusatzvolumen vergrößert oder verkleinert werden soll. An dem Stellkolben ist eine Stellkolbenstange 22a beziehungsweise 22b vorgesehen, die mit einer Einstelleinrichtung E zusammenwirkt, hier eine Zahnstange 23a beziehungsweise 23b und ein Einstellzahnrad 24a beziehungsweise 24b.

Bei beiden externen Puffergasspeichern links und rechts in Fig. 2 ist das Zusatzvolumen auf die gleiche Größe eingestellt. In dem rechten externen Puffergasspeicher 19b herrscht ein Druckmaximum, weil das Gas aus dem Puffergasraum 18b nahezu vollständig in den externen Puffergasspeichers gedrückt worden ist.

In dem linken externen Puffergasspeicher 19a herrscht annähernd der minimale Druck, weil hier der Puffergasraum in dem Puffergehäuse sein maximales Volumen erreicht hat und der Arbeitskolben 16a im Puffergehäuse 15a das Schokolade-Gas-Gemisch nahezu vollständig ausgestoßen hat.

Der Benutzer kann den Druck im Puffergasraum einstellen. Zu dem Zweck ist ein Druckvorratsspeicher vorgesehen (nicht dargestellt), der über ein einstellbares Druckregelventil 25a beziehungsweise 25b bewirkt, dass in dem externen Puffergasspeicher und dem damit verbundenen Puffergasraum stets der gewünschte Druck herrscht.

Durch die variable Größe des externen Puffergasspeichers kann beeinflusst werden, wie groß der Druckverlust ist, wenn der Arbeitskolben aus einer Endposition (Vorratsraum voll mit Schokolade) in die andere Endposition verfährt (Vorratsraum leer). Bei gegebenem Anfangsdruck ist der Druckabfall umso geringer, je größer das Zusatzvolumen des externen Puffergasspeichers ist beziehungsweise je größer das Gesamtvolumen an Puffergas.

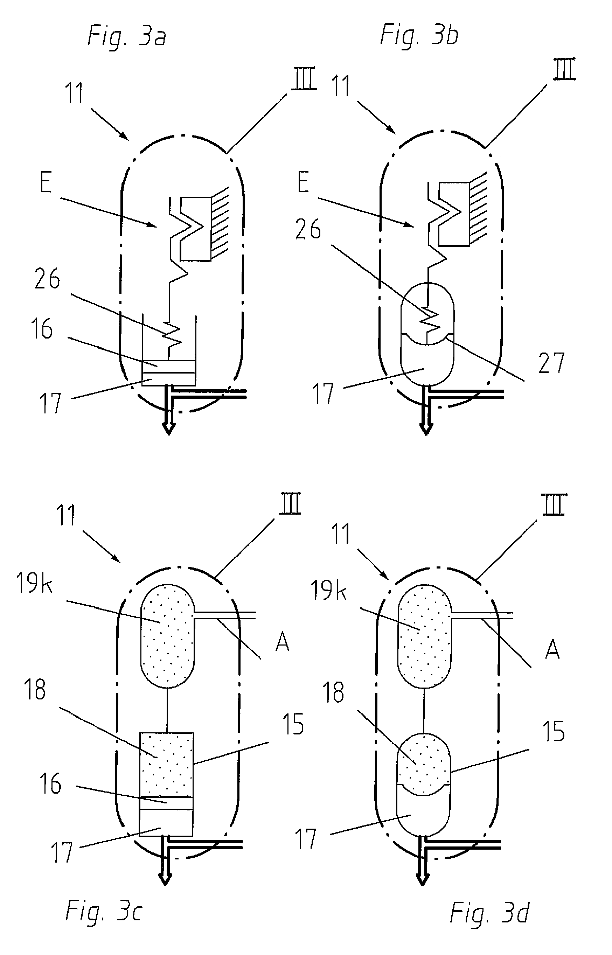

In Fig. 2 sind der Pufferspeicher und der externe Puffergasspeicher mit einer Strich-Punkt-Linie (III) umgeben. Für diese Baugruppe gibt es viele alternative Ausführungsformen. Einige davon sind in den Figuren 3a bis 3h schematisch dargestellt und ebenfalls mit einer Strich-Punkt-Linie (III) umgeben, um zu verdeutlichen, dass jede dieser Alternativen ersatzweise im Ausführungsbeispiel gemäß Fig. 2 vorgesehen sein könnte.

In Fig. 3a ist ein Pufferspeicher 11 in Form eines Zylinders gestaltet. Darin befindet sich ein Arbeitskolben 16, der von einer Feder 26 vorgespannt ist. An einem Ende der Feder ist eine Einstelleinrichtung E vorgesehen, die in zwei Raststufen gebracht werden kann. So kann eine größere oder eine kleinere Vorspannung der Feder 26 eingestellt werden.

Selbstverständlich kann bei allen zuvor und nachfolgend beschriebenen Ausführungsformen, die in Raststufen verstellbar sind, alternativ auch eine stufenlos verstellbare Einstelleinrichtung vorgesehen sein.

Das Ausführungsbeispiel gemäß Fig. 3b unterscheidet sich von dem Ausführungsbeispiel gemäß Fig. 3a dadurch, dass anstelle des Arbeitskolbens 16 eine Arbeitsmembrane 27 vorgesehen ist. Auch hier kann in zwei Raststufen eine größere oder eine kleinere Vorspannung der Feder 26 eingestellt werden.

In Fig. 3c wird Pufferspeicher 11 mit einem Puffergehäuse 15 und einem Arbeitskolben 16 darin vorgeschlagen. Der Arbeitskolben unterteilt das Puffergehäuse in einen Vorratsraum 17 für Schokolade-Gas-Gemisch und einen druckbeaufschlagten Puffergasraum 18. Der Puffergasraum ist mit einem externen Puffergasspeicher 19k verbunden, dessen Volumen fix und nicht veränderbar ist. An dem externen Puffergasspeicher kann eine Anschlussleitung mit einem Druckregelventil (nicht dargestellt) vorgesehen sein, über das ein vorbestimmter Druck im Puffergasspeicher gewährleistet werden kann. Das Ausführungsbeispiel gemäß Fig. 3d unterscheidet sich von dem Ausführungsbeispiel gemäß Fig. 3c dadurch, dass anstelle des Arbeitskolbens eine Arbeitsmembrane 27 vorgesehen ist.

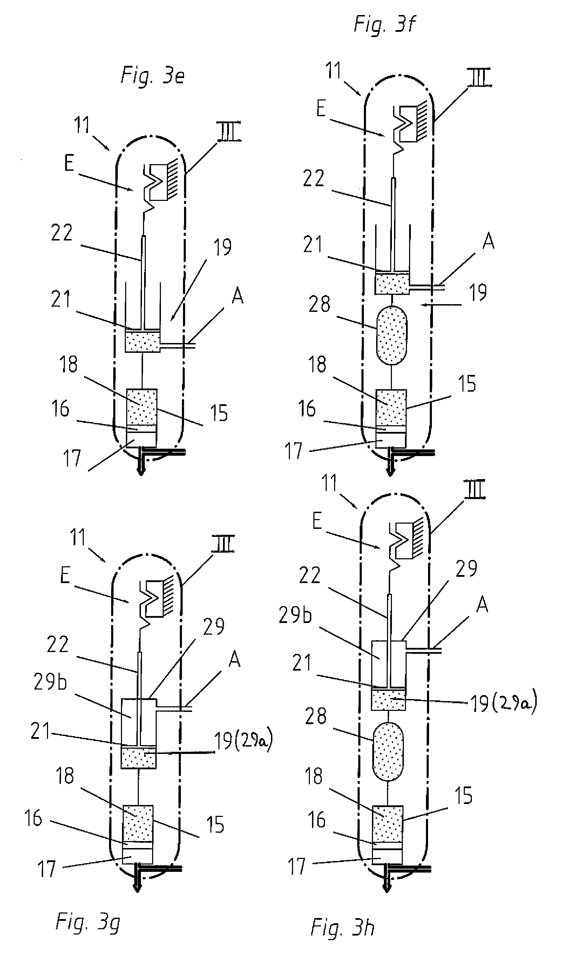

Fig. 3e zeigt einen Pufferspeicher 11 mit einem Puffergehäuse 15 und einem Arbeitskolben 16 darin. Der Arbeitskolben unterteilt das Puffergehäuse in einen Vorratsraum 17 für Schokolade-Gas-Gemisch und einen druckbeaufschlagten Puffergasraum 18. Der Puffergasraum ist mit einem externen Puffergasspeicher 19 verbunden, dessen Zusatzvolumen größeneinstellbar ist. Zum Zweck der Größeneinstellung ist eine Einstelleinrichtung E vorgesehen, mit der in zwei Raststufen ein größeres oder ein kleineres Zusatzvolumen eingestellt werden kann. An dem externen Puffergasspeicher kann eine Anschlussleitung A mit einem Druckregelventil 25 vorgesehen sein, über das ein vorbestimmter Druck im externen Puffergasspeicher gewährleistet werden kann.

Fig. 3f unterscheidet sich von Fig. 3e dadurch, dass zwischen dem Puffergasraum 18 des Puffergehäuses 15 und dem größenverstellbaren externen Puffergasspeicher 19 noch ein weiterer Druckbehälter 28 dazwischengeschaltet ist, der ein konstantes Zusatzvolumen für Puffergas beiträgt. Das zur Verfügung stehende Gesamtvolumen für Puffergas setzt sich daher zusammen aus dem Puffergasraum 18 im Puffergehäuse 15, dem Druckbehälter 28 und dem größenverstellbaren externen Puffergasspeicher 19. Ebenso, wie in Fig. 3e kann auch an dem externen Puffergasspeicher gemäß Fig. 3f eine Anschlussleitung A mit einem Druckregelventil (nicht dargestellt) vorgesehen sein, über das ein vorbestimmter Druck im Puffergasspeicher, respektive für das Gesamtvolumen Puffergases gewährleistet werden kann.

Die Ausführungsbeispiele der Figuren 3e und 3f weisen jeweils eine Einstelleinrichtung E auf, mit der die Größe des Zusatzvolumens des externen Puffergasspeichers 19 in zwei Raststufen eingestellt werden kann. Der Druck, der im externen Puffergasspeicher herrscht, übt dabei stets über einen Stellkolben 21 und eine Stellkolbenstange 22 eine Kraft aus, welche in die Einstelleinrichtung E geleitet wird. Wenn die Einstelleinrichtung von einer in die andere Raststufe umgeschaltet werden soll, muss gegen diese Kraft gearbeitet werden.

Ein weiteres Ausführungsbeispiel, welches auf jenem gemäß Fig. 3e basiert, zeigt Fig. 3g. Bei diesem ist der externe Puffergasspeicher 19 mit einem doppeltwirkenden Zylinder 29 ausgerüstet. Der doppeltwirkende Zylinder weist einen ersten Zylinderraum 29a auf, welcher den externen Puffergasspeicher 19 bildet und einen zweiten Zylinderraum 29b, der ebenfalls mit Gasdruck beaufschlagt werden kann. Auf diese Weise kann jener Kraft entgegengewirkt werden, die ein Stellkolben 21 aufgrund des im externen Puffergasspeicher herrschenden Druckes ausübt. Wenn also der zweite Zylinderraum ebenfalls druckbeaufschlagt ist, wird die Kraft reduziert, welche auf die Einstelleinrichtung einwirkt. Die Einstelleinrichtung lässt sich dann umso leichter von einer in die andere Raststufe umschalten, je geringer die Druckdifferenz zwischen dem externen Puffergasspeicher 19 und dem zweiten Zylinderraum 29b ist. Außerdem kann die Einstelleinrichtung kleiner dimensioniert werden, wenn sie geringeren Kräften ausgesetzt ist.

Die Position des Stellkolbens 21 kann so verändert werden, dass das Zusatzvolumen des externen Puffergasspeichers 19 vergrößert wird und damit einhergehend der zweite Zylinderraum 29b verkleinert wird. Dann steigt der im zweiten Zylinderraum herrschende Druck, was aber unerwünscht ist. Vorzugsweise ist deswegen in der Zuleitung des zweiten Zylinderraums 29b ein Druckregelventil (nicht dargestellt) vorgesehen, welches eine Entlüftungsfunktion aufweist. So kann auch bei einer Verkleinerung des zweiten Zylinderraums ein gleichmäßiger Druck gehalten werden.

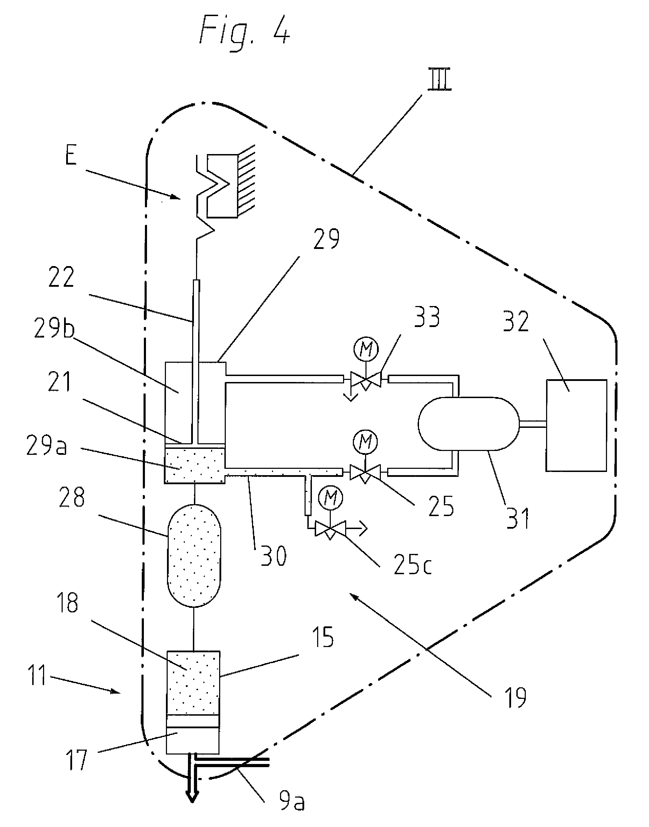

Ein bevorzugtes Ausführungsbeispiel eines Pufferspeichers 11 und einer Vorspanneinrichtung V ist in Fig. 4 dargestellt.

Fig. 4 ist eine Weiterbildung der Ausführung gemäß Fig. 3h. Im Vergleich zu dieser kommt hinzu, dass am externen Puffergasspeicher 19 eine Zuleitung 30 mit einem Druckregelventil 25 vorgesehen ist. Wenn der Druck im externen Puffergasspeicher abnimmt, beispielsweise aufgrund von Leckage, wird der Druckabfall durch das Druckregelventil wieder ausgeglichen. Das Druckregelventil wird aus einem Druckvorratsspeicher 31 gespeist, der mittels einer Druckerzeugereinheit 32 versorgt wird. Zusätzlich ist zwischen dem Druckregelventil 25 und dem ersten Zylinderraum 29a ein Ablassventil 25c angeordnet. Wenn die Vorrichtung an einen anderen Druck angepasst werden soll, mit dem das Gemisch aus der Aufbereitungseinrichtung in das Pumpsystem 4 gelangt, oder dann, wenn der erste Zylinderraum 29a durch verstellen des Stellkolbens 21 verringert wird, kann es erforderlich werden, Druck aus dem Puffergasspeicher 19 durch das Ablassventil 25c abzulassen.

Wie schon in Fig. 3h ist ein doppeltwirkender Zylinder 29 vorgesehen, dessen zweiter Zylinderraum 29b druckbeaufschlagt ist. Auch hier erfolgt die Speisung aus dem Druckvorratsspeicher 31 über ein zweites Druckregelventil 33, welches über eine Entlüftungsfunktion verfügt. Der Druck im zweiten Zylinderraum kann also auch dann in etwa konstant gehalten werden, wenn das Volumen des zweiten Zylinderraums durch eine entsprechende Verschiebung des Stellkolbens 21 verringert wird oder der Druck im Puffergasspeicher 19 abgesenkt wird.

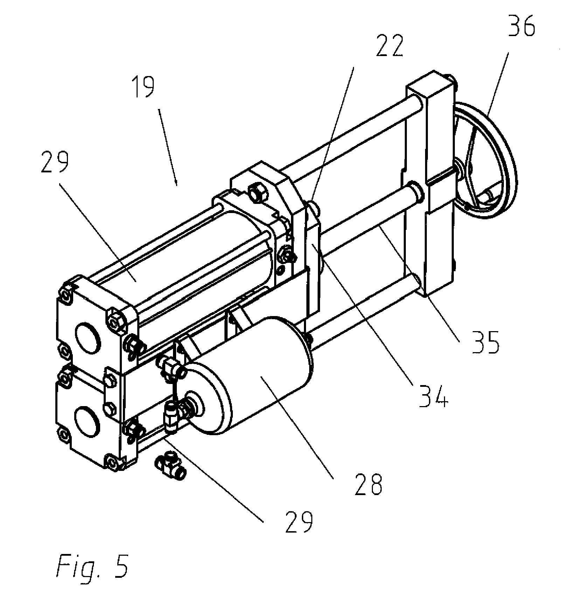

Fig. 5 zeigt ein Ausführungsbeispiel eines externen Puffergasspeichers 19, der aus einem Zwillingspaar doppeltwirkender Zylinder 29 gebildet ist. Außerdem ist an dem Zwillingspaar ein weiterer Druckbehälter 28 angeordnet, der ein konstantes Zusatzvolumen für Puffergas beiträgt.

Um die Größe des Zusatzvolumens der doppeltwirkenden Zylinder 29 einfach verändern zu können, sind die beiden Zylinder parallel nebeneinander angeordnet. So können die beiden Stellkobenstangen 22 einfach über ein Querlagerelement 34 aneinander gekoppelt werden. Das Querlagerelement 34 wirkt mit einem Spindelantrieb 35 zusammen. Der Spindelantrieb ist selbsthemmend, d. h. er kann durch die Kraft welche die Stellkolbenstangen 22 ausüben nicht verstellt werden. Er ist mit einer Handkurbel 36 versehen. Durch Drehen der Handkurbel kann das Querlagerelement parallel zu den Zylinderachsen vor und zurück bewegt werden und gleichzeitig damit die am Querlagerelement fixierten Stellkolbenstangen beider doppeltwirkenden Zylinder.

Selbstverständlich kann die Handkurbel sehr einfach durch einen Antriebmotor ersetzt werden.

### Bezugszeichenliste

- 1: Produktionsanlage
- 2: Vorrichtung zum Gießen
- 3: Aufbereitungsvorrichtung
- 4: Pumpsystem
- 5: Masseeingang
- 6a: Dosiermittel
- 6b: Dosiermittel
- 7a: Düse
- 7b: Düse
- 8: Gießform
- 8a: Formvertiefung
- 9: Hauptleitung
- 9a: Hauptleitungszweig
- 9b: Hauptleitungszweig
- 10a: Stellmittel
- 10b: Stellmittel
- 11: Pufferspeicher
- 11a: Pufferspeicher
- 11b: Pufferspeicher
- 12a: Dosierzylinder
- 12b: Dosierzylinder
- 13a: Dosierkolben
- 13b: Dosierkolben
- 14a: Stellkanal
- 14b: Stellkanal
- 15: Puffergehäuse
- 15a: Puffergehäuse
- 15b: Puffergehäuse
- 16: Arbeitskolben
- 16a: Arbeitskolben
- 16b: Arbeitskolben
- 17: Vorratsraum
- 17a: Vorratsraum
- 17b: Vorratsraum
- 18: Puffergasraum
- 18a: Puffergasraum
- 18b: Puffergasraum
- 19: Puffergasspeicher extern
- 19a: Puffergasspeicher extern
- 19b: Puffergasspeicher extern
- 19k: Puffergasspeicher fix
- 20a: Zylinder
- 20b: Zylinder
- 21: Stellkolben
- 21a: Stellkolben
- 21b: Stellkolben
- 22: Stellkolbenstange
- 22a: Stellkolbenstange
- 22b: Stellkolbenstange
- 23a: Zahnstange
- 23b: Zahnstange
- 24a: Einstellzahnrad
- 24b: Einstellzahnrad
- 25: Druckregelventil
- 25a: Druckregelventil
- 25b: Druckregelventil
- 25c: Ablassventil
- 26: Feder
- 27: Arbeitsmembrane
- 28: Druckbehälter
- 29: doppelt wirkender Zylinder
- 29a: erster Zylinderraum
- 29b: zweiter Zylinderraum
- 30: Zuleitung
- 31: Druckvorratsspeicher
- 32: Druckerzeugereinheit
- 33: Druckregelventil entlüftet
- 34: Querlagerelement
- 35: Spindelantrieb
- 36: Handkurbel

- A: Anschlussleitung
- E: Einstelleinrichtung
- V: Vorspanneinrichtung

## Patentansprüche

1. Verfahren zum Gießen eines aus Süßwarenmasse und Gas bestehenden heterogenen Gemisches mittels eines Pumpsystems (4), das wenigstens mit einem diskontinuierlich wirkenden Dosiermittel (6a, 6b) arbeitet, mit dem alternierend ein Ansaugschritt und ein Dosierschritt ausgeführt wird, wobei ein Stellmittel (10a, 10b) mit wenigstens einem Stellkanal (14a, 14b) zwischen einer Ansaugposition und einer Dosierposition umgeschaltet wird, mit der Maßgabe, dass das Gemisch mit einem Überdruck gegenüber dem außerhalb des Pumpsystems (4) herrschenden Atmosphärendruck in einen Masseeingang (5) des Pumpsystems (4) kontinuierlich hineingefördert wird, dass das Dosiermittel(6a, 6b) während des Dosierschritts durch eine Düse (7a, 7b) Gemisch in eine Gießform (8) einfüllt, wobei das Gemisch dann, wenn es die Düse (7a, 7b) verlässt, in die Atmosphäre außerhalb des Pumpsystems (4) gelangt und eingeschlossenes Gas in der Süßwarenmasse expandiert und Gasblasen gebildet werden, die eine Porosität der Süßwarenmasse erzeugen, wobei das Gemisch während des Ansaugschritts kontinuierlich vom Masseeingang (5) des Pumpsystems (4) weiter bis in das Dosiermittel (6a, 6b) gefördert wird, und wobei das Stellmittel (10a, 10b) anschließend in die Dosierposition umgeschaltet und gleichzeitig die weitere Zuförderung des Gemisches vom Masseeingang (5) des Pumpsystems (4) in das Dosiermittel (6a, 6b) unterbrochen wird, **wobei** das kontinuierlich in den Masseeingang (5) des Pumpsystems (4) hinein geförderte Gemisch dann, wenn das Stellmittel (10a, 10b) in seine Dosierposition geschaltet ist, in einen Pufferspeicher (11, 11a, 11b) des Pumpsystems (4) umgeleitet wird.

2. Verfahren nach Anspruch 1, **dadurch gekennzeichnet, dass** dann, wenn das Stellmittel (10a, 10b) in seine Ansaugposition umgeschaltet worden ist, zumindest ein Anteil des Gemisches aus dem Pufferspeicher (11, 11a, 11b) in das Dosiermittel (10a, 10b) gefördert wird.

3. Vorrichtung (2) zum Gießen eines aus Süßwarenmasse und Gas bestehenden komprimierten heterogenen Gemisches, umfassend wenigstens ein Pumpsystem (4) mit wenigstens einem Masseeingang (5) zur kontinuierlichen Zuleitung des komprimierten Gemisches in das Pumpsystem (4), wenigstens ein Dosiermittel (10a, 10b) und ein Stellmittel (10a, 10b) sowie eine Düse (7a, 7b) zur Abgabe des Gemisches, wobei das Pumpsystem (4) so gestaltet ist, dass alternierend ein Ansaugschritt und ein Dosierschritt ausführbar ist und das Stellmittel (10a, 10b) zu diesem Zweck zwischen einer Ansaugposition und einer Dosierposition umschaltbar ist, und wobei das komprimierte Gemisch während des Dosierschritts aus der Düse (7a, 7b) heraus durch die Atmosphäre, die das Pumpsystem (4) umgibt, in eine Gießform (8) einfüllbar ist, **wobei** das Pumpsystem (4) eine Hauptleitung (9, 9a, 9b) aufweist, die von dem Masseeingang (5) zum Stellmittel (10a, 10b) geführt ist, wobei eine Abzweigung von der Hauptleitung (9, 9a, 9b) vorgesehen ist, und wobei an der Abzweigung ein Pufferspeicher (11, 11a, 11b) angeordnet ist.

4. Vorrichtung nach Anspruch 3, **dadurch gekennzeichnet, dass** der Pufferspeicher (11, 11a, 11b) ein Puffergehäuse (15, 15a, 15b) aufweist, dass in dem Puffergehäuse (15, 15a, 15b) ein bewegliches Arbeitselement (16, 16a, 16b) angeordnet ist, dass das Arbeitselement (16, 16a, 16b) innerhalb des Puffergehäuses (15, 15a, 15b) einen Vorratsraum (17, 17a, 17b) mit variablem Volumen schafft, und dass das Gemisch in diesem Vorratsraum (17, 17a, 17b) speicherbar ist.

5. Vorrichtung nach Anspruch 4, **dadurch gekennzeichnet, dass** das Arbeitselement (16, 16a, 16b) an seiner dem Gemisch zugewandten Seite eine konkav gewölbte Oberfläche aufweist.

6. Vorrichtung nach einem der Ansprüche 3 bis 5, **dadurch gekennzeichnet, dass** eine Vorspanneinrichtung (V) für das Arbeitselement (16, 16a, 16b) vorgesehen ist, und dass die Vorspanneinrichtung (V) jene Seite des Arbeitselements (16, 16a, 16b) mit einer Kraft beaufschlagt, die dem Vorratsraum (17, 17a, 17b) abgewandt ist.

7. Vorrichtung nach Anspruch 6, **dadurch gekennzeichnet, dass** das auf derjenigen Seite des Arbeitselements (16, 16a, 16b), die dem Vorratsraum (17, 17a, 17b) abgewandt ist, innerhalb des Puffergehäuses (15, 15a, 15b) ein Puffergasraum (18, 18a, 18b) gebildet ist.

8. Vorrichtung nach Anspruch 7, **dadurch gekennzeichnet, dass** der Puffergasraum (18, 18a, 18b) seinerseits über eine Verbindungsleitung mit einem externen Puffergasspeicher (19, 19a, 19b) verbunden ist, in dem ein Zusatzvolumen an Gas unter Druck steht.

9. Vorrichtung nach Anspruch 8, **dadurch gekennzeichnet, dass** das Zusatzvolumen des externen Puffergasspeichers größenverstellbar ist.

10. Vorrichtung nach Anspruch 8 oder 9, **dadurch gekennzeichnet, dass** eine Druckerzeugereinheit (32) vorgesehen ist, und dass die Druckerzeugereinheit (32) mit dem externen Puffergasspeicher (19, 19a, 19b) verbunden ist.

11. Vorrichtung nach einem der Ansprüche 8 bis 10, **dadurch gekennzeichnet, dass** der externe Puffergasspeicher (19, 19a, 19b) wenigstens einen Zylinder (20a, 20b, 29) umfasst, dass der Zylinder (20a, 20b, 29) mit wenigstens einem ersten Zylinderraum (29a), einem Stellkolben (21, 21a, 21b) und wenigstens einer Stellkolbenstange (22, 22a, 22b) versehen ist, und dass der erste Zylinderraum das Zusatzvolumen des externen Puffergasspeichers (19, 19a, 19b) bildet.

12. Vorrichtung nach Anspruch 11, **dadurch gekennzeichnet, dass** eine Stellkolbenstange (22, 22a, 22b) sich zumindest auf derjenigen Seite des Stellkolbens (21, 21a, 21b) befindet, die dem als Zusatzvolumen wirkenden ersten Zylinderraum (29a) abgewandt ist, und dass die Stellkolbenstange (22, 22a, 22b) mit einer Einstelleinrichtung (E) versehen ist, mit welcher die Position des Stellkolbens (21, 21a, 21b) veränderbar ist.

13. Vorrichtung nach Anspruch 12, **dadurch gekennzeichnet, dass** die Einstelleinrichtung (E) einen Spindelantrieb (35) aufweist.

14. Vorrichtung nach einem der Ansprüche 10 bis 13, **da-durch gekennzeichnet, dass** ein von der Druckerzeugereinheit (32) gespeister Druckvorratsspeicher (31) vorgesehen ist, und dass der Druckvorratsspeicher (31) über ein erstes Druckregelventil (25, 25a, 25b) mit dem externen Puffergasspeicher (19, 19a, 19b) verbunden ist.

15. Vorrichtung nach Anspruch 14, **dadurch gekennzeichnet, dass** der Zylinder des externen Puffergasspeichers (19, 19a, 19b) ein doppeltwirkender Zylinder (29) mit einem zweiten Zylinderraum (29b) ist, dass ein zweites Druckregelventil (33) vorgesehen ist, und dass der Druckvorratsspeicher (31) über das zweite Druckregelventil (33) mit dem zweiten Zylinderraum (29b) des doppeltwirkenden Zylinders (29) verbunden ist.

16. Vorrichtung nach einem der Ansprüche 11 bis 15, **dadurch gekennzeichnet, dass** zusätzlich zu dem größenverstellbaren Zusatzvolumen des doppeltwirkenden Zylinders (29) wenigstens ein weiterer Druckbehälter (28) vorgesehen ist, der ein konstantes Zusatzvolumen zur Ergänzung des externen Puffergasspeichers beiträgt.

17. Vorrichtung nach einem der Ansprüche 10 bis 16, **dadurch gekennzeichnet, dass** die Druckerzeugereinheit (32) einen Druckverstärker aufweist, welcher den Druckvorratsspeicher ((31) speist.
